# EUROPÄISCHE PATENTSCHRIFT

(11) **EP 2 217 502 B1**
(45) Veröffentlichungstag und Bekanntmachung des Hinweises auf die Patenterteilung: **20.07.2011**
(21) Anmeldenummer: 08861186.8
(22) Anmeldetag: 04.11.2008
(51) Int. Cl.: B65B 61/08, B29C 59/00, B26D 3/08

(54) **VORRICHTUNG ZUM KONDITIONIEREN VON BEHÄLTERN AUS KUNSTSTOFF FÜR IHRE INGEBRAUCHNAHME**
APPARATUS FOR CONDITIONING PLASTIC CONTAINERS FOR PUTTING THE SAME INTO USE
DISPOSITIF POUR CONDITIONNER DES RÉCIPIENTS EN MATIÈRE PLASTIQUE EN VUE DE LEUR UTILISATION

(30) Priorität: 14.12.2007 DE 102007060419
(43) Veröffentlichungstag der Anmeldung: 18.08.2010
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2008/009265
(87) Internationale Veröffentlichungsnummer: WO 2009/077039

(56) Entgegenhaltungen:
- WO-A-99/65777
- US-A1- 2004 139 834

## Beschreibung

Die Erfindung betrifft eine Vorrichtung zum Konditionieren von Behältern aus Kunststoff für ihre Ingebrauchnahme, nämlich von solchen Behältern, insbesondere Ampullen, die in Behälterblöcken Seite an Seite an Trennlinien aneinander angeformt sind, an denen die Behälter zum Gebrauch voneinander abtrennbar sind.

Im Stand der Technik (DE 199 26 329 A1) sind Verfahren und Vorrichtungen zum Herstellen von Behältererzeugnissen aus Kunststoff bekannt. Zum Herstellen des jeweiligen Erzeugnisses wird ein Schlauch plastifizierten Kunststoffmaterials, wie Polyethylen oder Polypropylen, in eine formeinrichtung hinein extrudiert, das eine Ende des Schlauches durch Verschweißen verschlossen und durch Erzeugen eines am Schlauch wirkenden pneumatischen Druckgradienten dieser aufgeweitet und zur Bildung des Behälters an die formgebenden Wände der Formeinrichtung, bestehend aus zwei gegenüberliegenden Einzel-Formteilen, angelegt. Bei der Durchführung des auf diesem technischen Gebiet bekannten bottelpack®-Verfahrens wird dann über einen entsprechenden Fülldorn der jeweilige Kunststoffbehälter steril innerhalb der Formeinrichtung befüllt und nach Abziehen des Fülldornes anschließend hermetisch unter Bildung einer vorgebbaren Kopfgeometrie verschlossen, wobei für die Bildung des eigentlichen Kunststoffbehälters, in dem später das Fluid bevorratet ist, zwei Einzel-Formteile in Form von Formgebungsbacken beispielsweise mittels hydraulischer oder elektrischer Antriebsmittel für den Erhalt einer Schließstellung aufeinander zu und in eine ihrer Öffnungsstellungen voneinander weg gegenläufig bewegbar sind. Um hier zu sehr hohen Ausstoßraten an Behältererzeugnissen zu gelangen, ist in der DE 103 23 335 A1 eine Mehrstationenanordnung beschrieben, bei der, durch das Aufteilen verschiedener Formgebungsschritte an verschiedene, auf einem fiktiven Kreisbogen hintereinander angeordnete Stationen eine Art Karussell-Anordnung geschaffen ist, die sehr hohe Taktfrequenzen für das auszustoßende Kunststoffgut ermöglicht. Dieses tritt bei derartigen Vorrichtungen entlang einer Herstellungslinie in Form einer Behälterkette aus, bei der eine Mehrzahl von Einzelbehältern Seite an Seite nebeneinander liegen. Die Weiterbearbeitung erfolgt in der Weise, dass in Fortsetzung der Herstellungslinie mittels einer Stanzeinrichtung aus der Behälterkette, insbesondere in Form eines Ampullengurtes, Behälterblöcke oder Ampullenblöcke ausgestanzt werden, die je Block eine für Versand und Gebrauch geeignete Anzahl von Einzelbehältern aufweisen, wobei vielfach Ampullenblöcke vorgesehen sind, die je fünf über Trennlinien miteinander verbundene Ampullen aufweisen.

Die Anordnung der Behälter, beispielsweise Ampullen, in Blöcken ist, was Verpackung und Versand anbelangt, zweckmäßig und vorteilhaft. Andererseits gestaltet sich jedoch die Ingebrauchnahme der Einzelbehälter oder Ampullen wenig benutzerfreundlich. Selbst wenn die Trennlinien innerhalb der Blöcke sorgfältig und dünnwandig gestaltet sind, ist das Abtrennen mühsam oder gar schwierig, insbesondere wenn es sich um ein verhältnismäßig steifes Kunststoffmaterial handelt, wie dies bei Behältern aus Polypropylen der Fall ist.

Durch die WO 99/65777 A ist eine gattungsgemäße Vorrichtung zum Konditionieren von Behältern aus Kunststoff für ihre Ingebrauchnahme bekannt, nämlich von Ampullen, die in Behälterblöcken Seite an Seite an Trennlinien aneinander angeformt sind, an denen die Ampullen zum Gebrauch voneinander abtrennbar sind, wobei eine Trennstation vorgesehen ist, in die die Behälterblöcke in Transportschritten einfahrbar sind und in der für jede der Trennlinien ein Messer vorgesehen ist. Eine vergleichbare Schneidvorrichtungslösung ist auch durch die US 2004/139834 A1 aufgezeigt. Was die Separierung von Ampullen aus den Behälterblöcken für die Ingebrauchnahme entlang von Trennlinien anbelangt, lassen die bekannten Lösungen noch Wünsche offen; insbesondere ist eine relativ hohe Antriebsleistung zur Erzeugung der Trennlinien bei den bekannten Lösungen notwendig.

Im Hinblick hierauf liegt der Erfindung die Aufgabe zugrunde, eine Vorrichtung zur Verfügung zu stellen, die eine Konditionierung der Behälter derart ermöglicht, dass die Einzelbehälter oder die Ampullen für die Ingebrauchnahme einfach und bequem separierbar sind, trotzdem jedoch für Verpakkung und Versand ein sicherer Verbund an den Trennlinien beizubehalten ist.

Erfindungsgemäß ist diese Aufgabe durch eine Vorrichtung gelöst, die die Merkmale des Patentanspruches 1 in seiner Gesamtheit aufweist.

Demgemäß sieht die Erfindung eine Vortrennstation vor, in die die Behälterblöcke in Transportschritten einfahrbar sind und in der für jede der Trennlinien der Blöcke ein Schwingmesser vorgesehen ist, mittels dessen an der jeweils betreffenden Trennlinie ein Vortrenneinschnitt gebildet wird. Je nach den Festigkeitseigenschaften des Kunststoffmaterials der Behälter wird die Länge des Vortrenneinschnittes relativ zur Gesamtlänge der Trennlinie so gewählt, dass für Verpackung und Versand ein sicherer Zusammenhalt durch die jeweils verbliebene Länge der Trennlinie beibehalten ist, das Separieren jedoch einfach und ohne großen Kraftaufwand durchführbar ist. Wegen der hohen Taktfrequenzen, die bei rationell arbeitenden Behältern-Herstellsystemen üblich sind, ist es anzustreben, dass pro Transportschritt möglichst viele Behälter in die Vortrennstation eingefahren werden, diese also so ausgelegt ist, dass eine entsprechend große Anzahl von Schwingmessern vorhanden ist, die für den Schneidvorgang angetrieben werden müssen. Angesichts des verhältnismäßig steifen Kunststoffmaterials, dies gilt insbesondere für Polypropylen, der dadurch erforderlichen hohen Schneidkraft und der entsprechend hohen Antriebsleistung, die für den gemeinsamen Antrieb der Schwingmesser erforderlich ist, muß die Antriebseinrkhtung übermäßig leistungsstark und mit zu hohem Bedarf an Bauraum ausgebildet werden, wenn eine größere Anzahl von Schwingmessern gleichzeitig ihren Schneidhub durchführen. Im Hinblick hierauf ist bei der erfindungsgemäßen Vorrichtung die Anordnung so getroffen, dass die Schwingmesser mit dem gemeinsamen Antrieb in spezieller Weise so gekuppelt sind, dass Schneidhübe in zueinander zeitversetzter Abfolge stattfinden. Durch die so erreichte zeitliche Lastverteilung läßt sich bei gegebener Antriebsleistung eine höhere Anzahl von Schwingmesser betätigen.

Diesbezüglich können bei einer besonders vorteilhaften Ausführungsform die Schwingmesser für einen auf einer Kreisbahn erfolgenden Schneidhub ihrer Schneidkante radial auskragend an einer gemeinsamen, mit einem Drehantrieb verbundenen Messerwelle angeordnet sein, an der für die zeitversetzt Abfolge der Schneidhübe zumindest ein Schwingmessergegenüber zumindest einem weiteren Schwingmesser um einen Drehwinkel versetzt angebracht ist.

Wenn hierbei vorgesehen ist, dass pro Transportschritt mehr als ein Behälterblock in die Vortrennstation einfahrbar ist und hierbei für jeden mit den Vortrenneinschnitten zu versehenden Block eine Gruppe von Schwingmessern vorhanden ist, können diese vorzugsweise an der Messerwelle so orientiert sein, dass Vortrenneinschnitte gleichzeitig an mehr als einem Block stattfinden.

Bei für hohe Taktfrequenzen ausgelegten Vorrichtungen, bei denen pro Transportschritt drei Blöcke mit je fünf Ampullen in die Vortrennstation einfahrbar sind, kann die Anordnung mit Vorteil so getroffen sein, dass die je vier Schwingmesser jeder der Gruppen derart an der Wasserwelle angeordnet sind, dass gleichzeitig jeweils vier Schwingmesser, die zu zwei verschiedenen Gruppen gehören, den Schneidhub durchführen. Dies führt nicht nur zu einer optimalen zeitlichen Verteilung der Drehmomentbelastung der Antriebswelle, sondern auch aufgrund der in Axialrichtung der Welle versetzten Einleitung der Schneidkraft zu einer günstigen Biegemomentbelastung der Antriebswelle.

Bei vorteilhaften Ausführungsbeispielen sind die Behälterblöcke mittels einer Transporteinrichtung von einer Eingabestation zur Vortrennstation und aus dieser in eine für den Abtransport der mit Vortrenneinschnitten versehenen Behälterblöcke dienenden Abgabestation verfahrbar, wodurch die Möglichkeit des automatisierten Betriebes vom Extrudieren des Kunststoffmaterials bis zum Arbeitsschritt des Verpackens gegeben ist, indem die Eingabestation als Fortsetzung der Herstellungslinie unmittelbar der Stanzeinrichtung nachgeschaltet ist, in der die Behälterblöcke vom Behälterband ausgestanzt werden.

Vorzugsweise weist hierbei die Transporteinrichtung eine Führungsbahn auf, längs der ein Transportschieber bewegbar ist, der eine Einfassung für die zu transportierenden Behälterblöcke aufweist.

Hierbei kann die Anordnung so-getroffen sein, dass der Transportschieber in der geradlinig verlaufenden Führungsbahn zwischen Eingabestation und Vortrennstation hin- und hergehend bewegbar ist.

Hierbei kann in der Vortrennstation eine Abhebeeinrichtung vorgesehen sein, durch die die Behälterblöcke für die Vortrenneinschnitte aus dem Transportschieber heraus in eine Trennposition aushebbar sind, der Transportschieber somit für die Rückbewegung in die Eingabestation freigemacht und dadurch für den nächsten Transportschritt bereit ist.

Für die mit den Vortrenneinschnitten versehenen Blöcke kann die Transporteinrichtung eine Förderbahn zur Verschiebung dieser Blöcke in die Abgabestation aufweisen, aus der die vorgeschnittenen Behälterblöcke beispielsweise mittels eines Ausgabeförderers mit quer zurrichtung der Förderbahn verlaufender Transportrichtung abgegeben werden.

Nachstehend ist die Erfindung anhand eines in der Zeichnung darestellten Ausführungsbeispiels im einzelnen erläutert.

Es zeigen:
- Fig.1: eine stark schematisch vereinfacht dargestellte Seitenansicht eines Ausführungsbeispiels der erfindungsgemäßen Vorrich- tung;
- Fig.2: ebenfalls in stark schematisch vereinfachter Darstellung die Draufsicht des in Fig.1 gezeigten Ausführungsbeispiels;
- Fig.3: eine gegenüber Fig. 1 und 2 vergrößert dargestellte Schnittan- sicht entsprechend der Schnittlinie III - III von Fig.1 und
- Fig.4: eine annähernd in natürlichem Maßstab gezeichnete Seiten- ansicht eines Ampullenblocks im Fertigzustand, jedoch vor einer für die Ingebrauchnahme vorgenommenen Konditionie- rung.

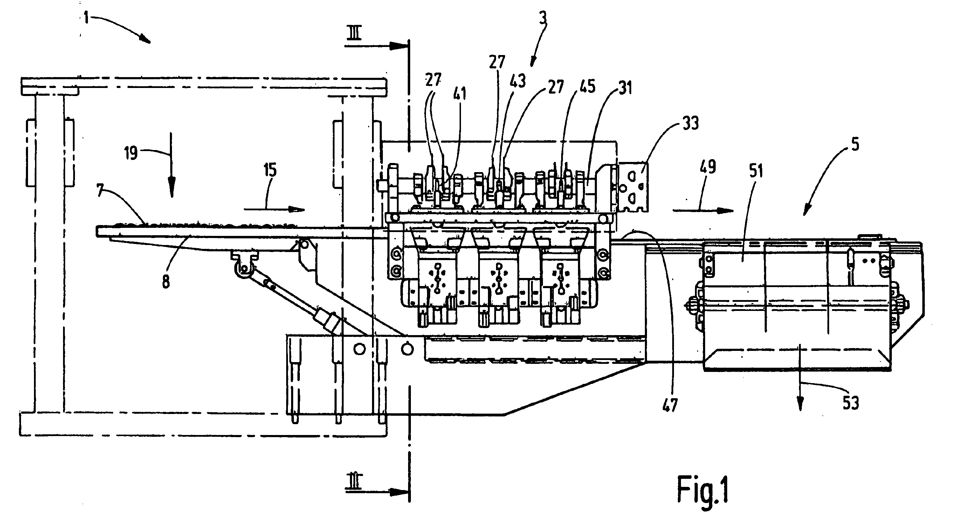

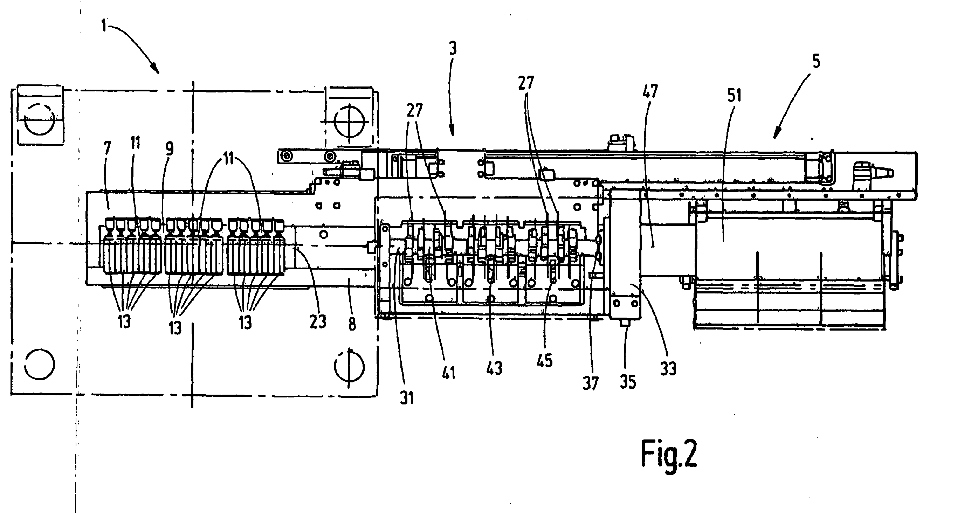

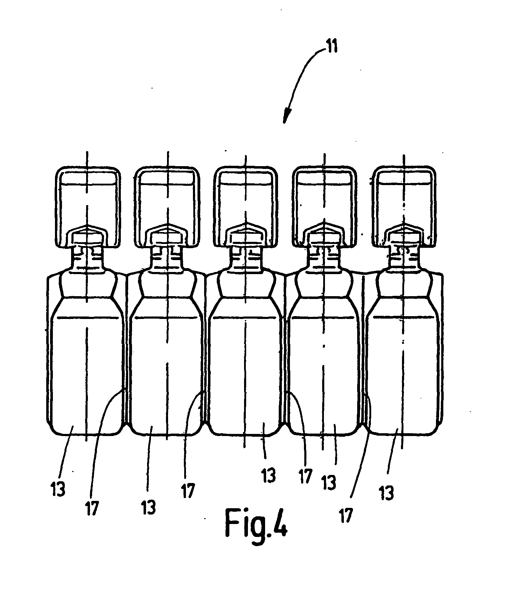

Das in der Zeichnung dargestellte Ausführungsbeispiel der erfindungsgemäßen Vorrichtung weist eine Eingabestation 1, eine Vortrennstation 3 und eine Abgabestation 5 auf. In der Eingabestation 1 befindet sich der Beginn einer Transporteinrichtung, mittels der entlang einer geradlinigen und horizontalen Führungsbahn 8 ein Transportschieber 7 verfahrbar ist. Dieser bildet eine Einfassung 9 (s.Fig.2), die als Sitz dient, in dem nebeneinanderliegend drei Ampullenblöcke 11 mit je fünf Ampullen 13 aufnehmbar sind, um sie in Richtung des Pfeiles 15 von Fig.1 in die Vortrennstation 3 einzufahren. Die Fig.4 zeigt in Einzeldarstellung einen derartigen Ampullenblock 11 mit fünf Einzelampullen 13, die an Trennlinien 17 längs ihrer aneinanderstoßenden Seitenränder aneinander angeformt sind.

Das gezeigte Ausführungsbeispiel der Vorrichtung bildet einen Fortsatz einer Behälter-Herstellungslinie, wobei sich die Vorrichtung an eine der Eingabestation 1 vorgeschaltete Stanzeinrichtung (nicht dargestellt) anschließt, in der die Ampullenblöcke 11 aus einem sog. Ampullengurt ausgestanzt werden, wie er beispielsweise nach dem bottelpack®-System hergestellt ist. Von der Stanzeinrichtung kommend werden die Blöcke 11, wie mit Pfeil 19 in Fig.1 angedeutet, in den sich am Anfang der Führungsbahn 8 befindlichen Transportschieber 7 eingelegt, so dass sich in der Einfassung 9 drei nebeneinanderliegende Blöcke 11 befinden.

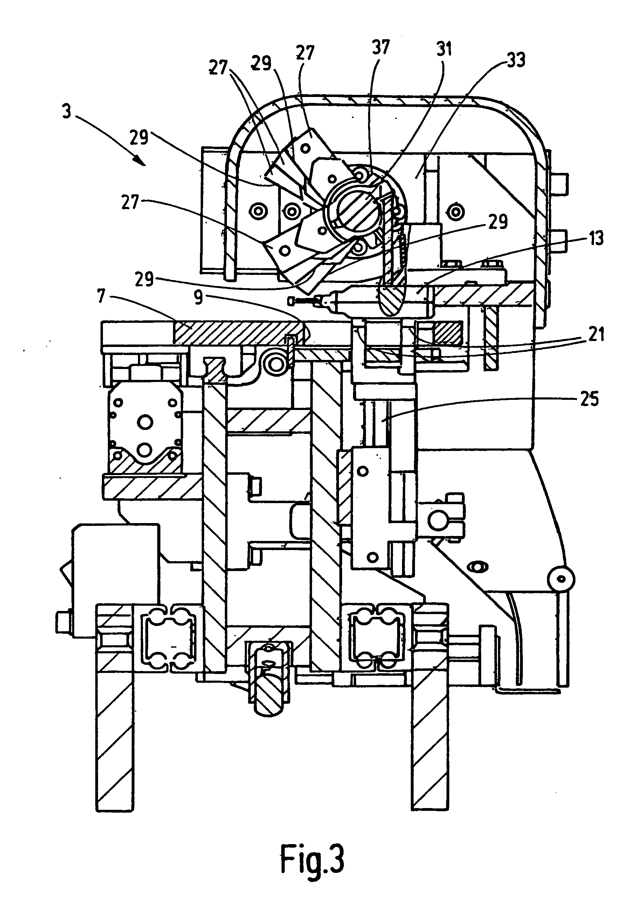

Nachdem der Transportschieber 7 mit den Blöcken 11 in die Vortrennstation 3 verfahren ist, werden die Blöcke 11 für die Durchführung der Vortrenneinschnitte an den Trennlinien 17 aus der Einfassung 9 des Transportschiebers 7 ausgehoben und in ihre Trennposition gebracht, wie sie in Fig.3 dargestellt ist. Dies erfolgt mittels einer Abhebeeinrichtung, die Abhebeschienen 21 aufweist, die vom offenen Ende 23 des Schiebers 7 her und über in diesem befindliche bodenseitige Öffnungen an der Unterseite der Ampullen 13 anliegen, um die Blöcke 11 aus der Einfassung 9 auszuheben. Zu diesem Zweck sind die Schienen 21 vertikal mittels einer Hubzylindereinrichtung 25 bewegbar. Sobald die Blöcke 11 in die Trennposition ausgehoben sind und der Transportschieber 7 somit freigemacht ist, wird dieser aus der Vortrennstation 3 wieder in die Eingabestation 1 zurück verfahren, um für den nächstfolgenden Transportschritt wiederum drei Ampullenblökke 11 aufzunehmen.

Für die Durchführung der Vortrenneinschnitte an den in der Trennposition befindlichen Blöcken 11 weist die Vortrennstation 3 eine der Anzahl der Trennlinien 17 entsprechende Anzahl von Schwingmessern 27 auf, von denen in der Zeichnung lediglich einige der in Fig.3 sichtbaren Schwingmesser 27 mit Bezugszahlen bezeichnet sind. Jedes Schwingmesser 27 weist eine Schneidkante 29 (nicht sämtliche beziffert) auf, die für den Vortrenneinschnitt auf einer Kreisbahn bewegt wirt, indem die Schwingmesser 27 eine Schwenkbewegung durchführen. Zu diesem Zweck sind die Schwingmesser 27 an einergemeinsamen Antriebswelle 31 angebracht, die mittels einer Antriebseinrichtung 33 drehbar ist. Bei dieser handelt es sich beim vorliegenden Beispiel um einen Zahnstangenantrieb, bei dem eine Zahnstange 35 hydraulisch, pneumatisch oder elektrisch hin und her bewegt wird und über ein Zahnritzel und eine Freilaufkupplung 37 (Fig.2) die Welle 31 antreibt.

Beim vorliegenden Beispiel, wo drei Blöcke 11 mit je fünf Ampullen 13 gleichzeitig in der Vortrennstation 3 in die Trennposition gebraucht werden und somit zwölf Schwingmesser 27 an der Welle 31 angebracht sind, würde ein gleichzeitig erfolgender Vortrenneinschnitt an sämtlichen Trennlinien 17 zu einem sehr hohen Bedarf an Antriebsleistung für die Antriebswelle 31 führen, insbesondere dann, wenn die Ampullen 13 aus einem Kunststoffmaterial gebildet sind, das, wie beispielsweise Polypropylen, verhältnismäßig steif ist. Um dem abzuhelfen, ist bei der Erfindung die Anordnung so getroffen, dass die Schwingmesser 27 an der Antriebswelle 31 in spezieller Anordnung angebracht sind, nämlich in der Weise, dass die Schneidkanten 29 einiger Messer 27 gegenüber den Schneidkanten 29 anderer Messer 27 an der Welle 31 um einen Drehwinkel versetzt sind. Bei dererfindungsgemäßen Vorrichtung sind die Messer 27 entsprechend der drei Blöcke 11 in drei Messergruppen 41, 43 und 45 (Fig.1 und 2) angeordnet, die je vier Messer 27 umfassen. Dabei ist die Orientierung an der Welle 31 so gewählt, dass der Schnitt gleichzeitig jeweils durch vier Schneidkanten 29 erfolgt und dass hierbei jeweils Messer 27 zweier verschiedener Gruppen 41,43,45 beteiligt sind.

Wie der Vergleich der Fig.1 und 2 zeigt, kann hierzu die Verteilung der Drehpositionen so gewählt sein, dass, wie bei Fig.1, die beiden mittleren Messer 27 der nebeneinanderliegenden Gruppen 41 und 43 gleich orientiert sind. Fig.2 verdeutlicht eine Verteilung, bei der bei der Gruppe 41 die beiden außen liegenden Messer 27 und bei der Gruppe 45 die beiden innen liegenden Messer 27 die gleiche Orientierung an der Welle 31 aufweisen.

Aus Fig.3 läßt sich erkennen, dass bei der Drehbewegung der Welle 31 entgegen dem Uhrzeigersinn die Schneidkanten 29 auf einer Kreisbahn bewegt werden und dass dabei die radial am weitesten außen liegenden Enden der Schneidkanten 29 sich über einen Großteil der Länge der Ampullen 13 bewegen, die radial äußersten Enden der Schneidkanten 29 jedoch aus der Ampullentrennlinie 17 austreten, bevor die gesamte Trennlinie 17 durchgeschnitten ist. Mit anderen Worten gesagt, bestimmt die radiale Länge der Schneidkanten 29, bezogen auf die Drehachse 31, und die Lage der Ampullen 13 in der Trennposition, die Länge des Vortrenneinschnittes, die jeweils so gewählt ist, dass die Ampullen 13 in den vorgeschnittenen Blökken 11 noch ausreichend verbunden sind, wie dies für Verpackung und Versand zweckmäßig ist, dass jedoch für die Ingebrauchnahme ein müheloses Separieren der Ampullen 13 möglich ist.

Nachdem der Transportschieber 7, der durch Ausheben der Blöcke 11 freigemacht ist, wieder zur Eingabestation 1 hin zurückbewegt wird und die Abhebeeinrichtung die vorgeschnittenen Blöcke 11 freigibt, indem die Abhebeschienen 21 nach unten versenkt sind, gelangten die vorgeshnittenen Blöcke 11 auf eine Förderbahn 47, wodurch sie in Richtung eines Pfeiles 49 von Fig.1 zur Abgabestation 5 gelangen. Zur endgültigen Ausgabe der vorgeschnittenen Blöcke 11 für Verpackung und Versand weist die Abgabestation 5 einen Ausgabeförderer 51 auf, der die Blöcke 11 mit quer zur Richtung der Förderbahn 47 verlaufender Transportrichtung, wie mit Pfeil 53 angedeutet, abgibt.

## Patentansprüche

1. Vorrichtung zum Konditionieren von Behältern aus Kunststoff für ihre Ingebrauchnahme, nämlich von solchen Behältern, insbesondere Ampullen (13), die in Behälterblöcken (11) Seite an Seite an Trennlinien (17) aneinander angeformt sind, an denen die Behälter (13) zum Gebrauch voneinander abtrennbar sind, **dadurch gekennzeichnet, dass** eine Vortrennstation (3) vorgesehen ist, in die die Behälterblöcice (11) in Transportschritten einfahrbar sind und in der für jede der Trennlinien (17) ein Schwingmesser (27) vorgesehen ist, wobei die Schwingmesser (27) für einen Schneidhub zur Erzeugung eines Vortrenneinschnittes an der jeweils betreffenden Trennlinie (17) mit einem gemeinsamen Antrieb (31,33) derart gekuppelt sind, dass die Schneidhübe zumindest eines Schwingmessers (27) gegenüber den Schneidhüben zumindest eines weiteren Schneidmessers (27) in zueinander zeitversetzter Abfolge erfolgen.

2. Vorrichtung nach Anspruch 1, **dadurch gekennzeichnet, dass** die Schwingmesser (27) für einen auf einer Kreisbahn erfolgenden Schneidhub ihrer Schneidkante (29) radial auskragend an einer gemeinsamen, mit einem Drehantrieb (33) verbundenen Messerwelle (31) angeordnet sind, an der für die zeitversetzte Abfolge der Schneidhübe zumindest ein Schwingmesser (27) gegenüber zumindest einem weiteren Schwingmesser (27) um einen Drehwinkel versetzt angebracht ist.

3. Vorrichtung nach Anspruch 1 oder 2, **dadurch gekennzeichnet, dass** in die Vortrennstation (3) pro Transportschritt mehr als ein Behälterblock (11) einfahrbar ist, dass für jeden mit den Vortrenneinschnitten zu versehenen Block (11) eine Gruppe (41,43,45) von Schwingmessern (27) vorhanden ist und dass diese so an der Messerwelle (31) orientiert sind, dass Vortrenneinschnitte gleichzeitig an mehr als einem Block (11) stattfinden.

4. Vorrichtung nach Anspruch 3, **dadurch gekennzeichnet, dass** pro Transportschritt drei Blöcke (11) mit je fünf Ampullen (13) in die Vortrennstation (3) einfahrbar sind und dass die je vier Schwingmesser (27) dreier Gruppen (41,43,45) derart an der Messerwelle (31) angeordnet sind, dass gleichzeitig jeweils vier Schwingmesser (27), die zu zwei verschiedenen Gruppen (41,43,45) gehören, den Schneidhub durchführen.

5. Vorrichtung nach Anspruch 4, **dadurch gekennzeichnet, dass** die Behälterblöcke (11) mittels einer Transporteinrichtung (7,8,47) von einer Eingabestation (1) zur Vortrennstation (3) und aus dieser in eine für den Abtransport der mit Vortrenneinschnitten versehenen Behälterblöcke (11) dienende Abgabestation (5) verfahrbar sind.

6. Vorrichtung nach Anspruch 5, **dadurch gekennzeichnet, dass** die Transporteinrichtung eine Führungsbahn (8) aufweist, längs derenein Transportschieber (7) bewegbar ist, der eine Einfassung (9) für die in die Vortrennstation (3) zu transportierenden Behälterblöcke (11) aufweist.

7. Vorrichtung nach Anspruch 6, **dadurch gekennzeichnet, dass** der Transportschieber (7) in der geradlinig verlaufenden Führungsbahn (8) zwischen Eingabestation (1) und Vortrennstation (3) hin- und hergehend bewegbar ist.

8. Vorrichtung nach Anspruch 7, **dadurch gekennzeichnet, dass** in der Vortrennstation (3) eine Abhebeeinrichtung (21) vorgesehen ist, durch die die Behälterblöcke (11) für die Vortrenneinschnitte aus dem Transportschieber (7) heraus in eine Trennposition aushebbar sind.

9. Vorrichtung nach Anspruch 8, **dadurch gekennzeichnet, dass** die Transporteinrichtung für die mit den Vortrenneinschnitten versehenen Blöcke (11) eine Förderbahn (47) zur Verschiebung in die Abgabestation (5) bildet.

10. Vorrichtung nach Anspruch 9, **dadurch gekennzeichnet, dass** in der Abgabestation (5) ein die Behälterblöcke (11) mit quer zur Richtung der Förderbahn (47) verlaufender Transportrichtung abführender Ausgabeförderer (51) vorhanden ist.

## Claims

1. An apparatus for conditioning plastic containers for putting the same into use, specifically containers, in particular ampules (13), which are moulded onto one another so as to form container blocks (11) side by side at separating lines (17) at which the containers (13) can be separated from one another for use, **characterised in that** there is a pre-separation station (3) into which the container blocks (11) can be moved in conveying steps and in which there is provided for each of the separating lines (17) an oscillating knife (27), the oscillating knives (27) being coupled to a common drive (31, 33) for a cutting stroke in order to produce a pre-separation incision at the relevant separating line (17) in each case such that the cutting strokes of at least one oscillating knife (27) take place in a sequence that is offset in time in relation to the cutting strokes of at least one further cutting knife (27).

2. The apparatus according to Claim 1, **characterised in that** the oscillating knives (27) are arranged, radially projecting, on a common blade shaft (31) connected to a rotary drive (33) in order for a cutting stroke of their cutting edge (29) to follow a circular path and on which at least one oscillating knife (27) is mounted so as to be offset relative to at least one further oscillating knife (27) by an angle of rotation for the time offset sequence of the cutting strokes.

3. The apparatus according to Claim 1 or 2, **characterised in that** in each conveying step more than one container block (11) can be moved into the pre-separation station (3) and that each block (11) that is to be provided with the pre-separation incisions has a group (41, 43, 45) of oscillating knives (27), and that the latter are oriented on the blade shaft (31) such that pre-separation incisions take place simultaneously at more than one block (11).

4. The apparatus according to Claim 3, **characterised in that** three blocks (11) with five ampules each (13) can be moved into the pre-separation station (3) in each conveying step, and that four oscillating knives (27) of each of three groups (41, 43, 45) are arranged on the blade shaft (31) such that in each case four oscillating knives (27), which belong to two different groups (41, 43, 45), perform the cutting stroke at the same time.

5. The apparatus according to Claim 4, **characterised in that** the conveying device (7, 8, 47) can move the container blocks (11) from an input station (1) to the pre-separation station (3) and from the latter into a discharging station (5) that is used to remove the container blocks (11) provided with pre-separation incisions.

6. The apparatus according to Claim 5, **characterised in that** the conveying device has a guide track (8) along which can be moved a transport slide (7) that has a frame (9) for the container blocks (11) that are to be conveyed into the pre-separation station (3).

7. The apparatus according to Claim 6, **characterised in that** the transport slide (7) in the linearly running guide track (8) can be moved so as to shuttle back and forth between the input station (1) and the pre-separation station (3).

8. The apparatus according to Claim 7, **characterised in that** the pre-separation station (3) has a lifting device (21) that can lift the container blocks (11) out of the transport slide (7) into a separating position for the pre-separation incisions.

9. The apparatus according to Claim 8, **characterised in that** the conveying device forms a conveying track (47) for moving the blocks which are provided with the pre-separation incisions into the discharging station (5).

10. The apparatus according to Claim 9, **characterised in that** the discharging station (5) forms an unloading conveyor (51) which discharges the container blocks (11) with a conveying direction extending transversely to the direction of the conveying track (47).

## Revendications

1. Installation de conditionnement de récipients en matière plastique pour leur mise en utilisation, à savoir de récipients tels, notamment d'ampoules (13), qui sont formés les uns à côtés des autres, côte à côte sur des lignes (17) de séparation en blocs (11) de récipients, lignes sur lesquelles les récipients (13) peuvent être séparés les uns des autres pour l'utilisation, **caractérisée en ce qu'**il est prévu un poste (3) de préséparation, dans lequel les blocs (11) de récipients peuvent être introduits en des stades de transport et dans lequel il est prévu, pour chacune des lignes (17) de séparation, un couteau (27) oscillant, les couteaux (27) oscillants étant, pour une course de coupe pour la production d'une entaille de préséparation sur la ligne (17) de séparation concernée respectivement, accouplés à un entraînement (31, 33) commun de manière à ce que les courses de coupe d'au moins un couteau (27) oscillant s'effectuent suivant une succession décalée mutuellement dans le temps par rapport aux courses de coupe d'au moins un autre couteau (27) de coupe.

2. Installation suivant la revendication 1, **caractérisée en ce que** les couteaux (27) oscillants sont, pour une course de coupe s'effectuant sur une trajectoire circulaire de leur bord (29) de coupe, montés en saillie radialement sur un arbre (31) de couteau commun relié à un entraînement (33) en rotation, arbre sur lequel, pour la succession décalée dans le temps des courses de coupe, au moins un couteau (27) oscillant est monté, de manière décalée d'un angle de rotation, par rapport à au moins à un autre couteau (27) oscillant.

3. Installation suivant la revendication 1 ou 2, **caractérisée en ce que** dans le poste (3) de préséparation peut être introduit par stade de transport plus d'un bloc (11) de récipients, **en ce que**, pour chaque bloc (11) à munir des entailles de préséparation, il y a un groupe (41, 43, 45) de couteaux (27) oscillants, et **en ce que** ceux-ci sont orientés sur l'arbre (31) de couteau de manière à ce que les entailles de préséparation se produisent en même temps sur plus d'un bloc (11).

4. Installation suivant la revendication 3, **caractérisée en ce que**, par stade de transport, trois blocs (11) ayant respectivement cinq ampoules (13) peuvent être introduits dans le poste (3) de préséparation et **en ce que** les quatre couteaux (27) oscillants de trois groupes (41, 43, 45) sont montés sur l'arbre (31) de couteau de manière à ce qu'en même temps, respectivement quatre couteaux (27) oscillants qui appartiennent à deux groupes (41, 43, 45) différents effectuent la course de coupe.

5. Installation suivant la revendication 4, **caractérisée en ce que** les blocs (11) de récipients peuvent être transportés au moyen d'un dispositif (7, 8, 47) de transport d'un poste (1) d'entrée au poste (3) de préséparation et de celui-ci dans un poste (7) de sortie servant à la sortie des blocs (11) de récipients munis des entailles de préséparation.

6. Installation suivant la revendication 5, **caractérisée en ce que** le dispositif de transport a une voie (8) de guidage le long de laquelle peut se déplacer un tiroir (7) de transport, qui comporte un châssis (9) pour les blocs (11) de récipients à transporter dans le poste (3) de préséparation.

7. Installation suivant la revendication 6, **caractérisée en ce que** le tiroir (7) de transport peut aller et venir dans la voie (8) de guidage rectiligne entre le poste (1) d'entrée et le poste (3) de préséparation.

8. Installation suivant la revendication 7, **caractérisée en ce qu'**il est prévu dans le poste (3) de préséparation un dispositif (21) de soulèvement, par lequel les blocs (11) de récipients peuvent, pour les entailles de préséparation, venir en sortant du tiroir (7) de transport, dans une position de séparation.

9. Installation suivant la revendication 8, **caractérisée en ce que** dans le dispositif de transport forme, pour les blocs (11) munis des entailles de préséparation, une voie (47) de transport pour venir dans le poste (5) de sortie.

10. Installation suivant la revendication 9, **caractérisée en ce que** le poste (5) de sortie, il y a un convoyeur (51) de sortie évacuant les blocs (11) de récipients suivant une direction de transport s'étendant transversalement à la direction de la voie (47) de transport.
